## Europäisches Patentamt
## European Patent Office
## Office européen des brevets

(19)

(11) Publication number: **0 122 605**
**B1**

(12)

# EUROPEAN PATENT SPECIFICATION

(45) Date of publication of patent specification: **12.10.88**

(51) Int. Cl.⁴: **A 01 N 25/34, A 01 K 13/00**

(21) Application number: **84104122.1**

(22) Date of filing: **12.04.84**

(54) **A pesticidal article.**

(30) Priority: **13.04.83 ZA 832597**

(43) Date of publication of application:
**24.10.84 Bulletin 84/43**

(45) Publication of the grant of the patent:
**12.10.88 Bulletin 88/41**

(84) Designated Contracting States:
**AT BE CH DE FR GB IT LI LU NL SE**

(56) References cited:
**FR-A-2 372 623**
**US-A-4 213 423**
**US-A-4 237 822**

(73) Proprietor: **THE WELLCOME FOUNDATION LIMITED**
**183-193 Euston Road**
**London NW1 2BP (GB)**

(72) Inventor: **Baker, Rodney Cyril**
**17 Rooikrans Crescent Van Riebeeck Park**
**Kempton Park Transvaal (ZA)**
Inventor: **van Rensburg, Philippus Jansen**
**Post Office Box 13**
**North Rand, Transvaal (ZA)**

(74) Representative: **Sandmair, Kurt, Dr. et al**
**Patentanwälte Schwabe, Sandmair, Marx**
**Stuntzstrasse 16**
**D-8000 München 80 (DE)**

EP 0 122 605 B1

Courier Press, Leamington Spa, England.

**Description**

This invention relates to a pesticidal article.

Many animals are plagued by ectoparasites, such as biting flies, ticks, lice and fleas, which harm or irritate the animal and may cause economic loss in commercially-exploited species, both by direct action and by carrying disease organisms. In addition, the pests may spread to humans.

For large animals, such as cattle, sheep and horses, established countermeasures include dipping the animal in a solution (or suspension) or a pesticide, spraying it with such a liquid, and pouring a small amount of a concentrated liquid onto a limited portion of the animal. Such techniques are acceptable on farms but are messy and wasteful of the pesticidal fluid when used in the house or even in stables. It has been proposed to impregnate a sponge-like object with a pesticidal fluid for wiping onto the animal's coat (see, for example, U.S. Patent Specification No 3 496 589). However, such sponges can be difficult to handle without accidentally squeezing the fluid out, and penetration of the animal's coat can be poor. Only a liquid form of the pesticide can be used.

United States patent specification No. 4,143,982 discloses a brush for dispensing insecticidal material onto the fur of an animal. This prior brush comprises a hollow handle in which the insecticidal powder is stored, there being holes in the side from which the bristles extend. As the brush is used, the insecticidal powder falls out of the handle through the holes between the bristles and then onto the animal's fur. This prior brush has several disadvantages. For example, it is difficult to control the rate at which the insecticidal powder is dispensed, since the rate is largely determined (a) by the precise manner in which the user brushes the animal, (b) by the amount of powder remaining within the hollow handle, and (c) by the number of the holes which have become blocked. Furthermore, in order to prevent powder leaving the hollow handle when the brush is not in use, the prior brush has a sliding means which may be used to block, wholly or partially, the exit holes. This is a relatively complicated arrangement. Finally, only a powder form of the pesticide can be used.

The present invention seeks to provide an improved means for applying a pesticide to an animal.

Accordingly, the present invention provides an article comprising a base and a plurality of protrusions therefrom, which protrusions may be passed with a brushing or combing action through the fur or other hair covering of an animal, at least some of the protrusions being made of a polymeric material comprising a pesticide capable of blooming onto the surface of the material.

The article is preferably a brush or comb or may take the form of an attachment for a separate handle. The pesticide incorporated in the article may be liquid or solid.

The proportion of the article which comprises pesticide may be varied. For example, it may be desirable for the portion of the article which would normally be held in the hand of the user to be made of the polyermic material without pesticide, so that there is less chance of the user suffering ill effect from the pesticide. Another variation is for part of the article, for example one series of bristles if the article is a brush, to comprise one pesticide and for another portion of the grooming article to comprise a different pesticide. It is therefore possible for the two pesticides to be separated from one another until the moment at which they are deposited onto the fur of the animal; this can be advantageous when the two pesticides in question are liable to react adversely with one another.

Equally, particularly when the article takes the form of a brush, it is possible for some of the bristles to be formed of a relatively stiff material, for example steel or animal hair, and for at least some of the remaining bristles to be formed of polymeric material comprising the pesticide. In this way, the relatively stiff bristles provide a primary grooming action, particularly for an animal having a dense coat, and the remaining bristles provide the pesticide.

The invention also provides a method of manufacturing a pesticidal article, which comprises forming an article as defined above from a mixture comprising a polymeric material and a pesticide capable of blooming out of the article, in use.

The article may be manufactured by any convenient means, for example by injection moulding or extrusion.

The polymeric material present in the article according to the invention may be thermosetting or thermoplastic, although the latter is more readily employed in the manufacture of the article. Examples of suitable materials are polyolefins (for example polyethylene, polypropylene and copolymers of ethylene and propylene); polyacrylates (for example polymers and copolymers of methyl acrylate, ethyl acrylate, methyl methacrylate and ethyl methacrylate); polymers of vinyl compounds (for example polystyrene and polymerized divinylbenzene); polyvinyl halides (for example polyvinyl chloride); polyvinyl acetals (for example polyvinyl butyral, polyvinylidene compounds (for example polyvinylidene chloride); synthetic and natural elastomers (for example rubber obtained from *Hevea brasiliensis,* cis-1,4-polyisoprene, polybutadiene and SBR rubber); urea-formaldehyde and melamine-formaldehyde resins; epoxy resins (for example polymers of polyglycidyl ethers of polyhydric phenols); cellulose plastics (for example cellulose acetate, cellulose acetate, cellulose butyrate and cellulose nitrate); and polyurethanes. Choice of the material will depend both on the particular pesticide with which it is to be formulated and the sort of article to be produced. The material, to be most effective, must be insoluble in water and present a hydrophobic surface, thus resisting the absorption of moisture on its surface.

Preferably, the material is a polymer or a copolymer of a vinyl compound, for example polyvinyl

# 0 122 605

halides; polyacrylate and polymethacrylate esters; or polymers of vinyl benzenes (for instance, polystyrene and polymerized vinyl toluene). Because it combines the most desirable physical properties with the most compatibility for the pesticide, the most preferred materials are polymers or copolymers of vinyl chloride.

Although soft plastics materials such as polyethylene and polyvinylchloride can be used, nylon may also be considered. The article should be sufficiently tough to be used without breaking. Since it is normally in the form of a brush or comb, this determines to a large extent the toughness of the plastics material used. It should be flexible but not brittle, and must allow blooming of the pesticide from the article.

It is generally necessary to include a plasticizer in the material in order to enable satisfactory articles to be formed from it. Example of plasticizers are phthalates (for example dioctyl phthalate, diphenyl phthalate, dicyclohexyl phthalate); sebacates (for example dipentyl sebacate, n-butyl benzyl sebacate and dibenzyl sebacate); and adipates (for example dioctyl adiptate, dicapryl adipate, di-isobutyl adipate and dinonyl adipate). Other compatible plasticizers include hydrogenated polyphenols, alkylated aromatic hydrocarbons, and polyester plasticizers, for example polyesters of polyols, such as hexanediol, and polycarboxylic acids, such as sebacic or adipic acid, having molecular weights of about 2000.

Other materials (for example, dyes, pigments, lubricants, fillers, extenders, anti-oxidants and ultraviolet stabilizers) may be included in the material. For example, it has been found that the stability of both the polymeric material and the pesticide is extended if a stabilizing amount, preferably 0.1% w to 10% w, of a phenol is included in the material; for example phenol, p-cresol, m-cresol, hydroquinone, resorcinol and pyrogallol are effective as stabilizers. The phenols are preferably unsubstituted and alkyl-substituted mono- and di-hydroxy-benzenes wherein the alkyl groups have not more than eight carbon atoms. Particularly preferred phenols are phenolic anti-oxidants, for example mononuclear phenols having a phenolic hydroxyl group which is hindered by one or more ortho-alkyl groups.

Stabilisers specifically for the pesticide include calcium oxide, epoxidised soy bean oil and other epoxy compounds. A heat stabilizer, such as tribasic lead sulphate (TBLS) and/or calcium oxide may be used.

Lubricants include stearic acid. Examples of extenders are Cereclor (chlorinated hydrocarbon, trade name of ICI Ltd), Conoflex, Mobilsol (high aromatic content petroleum based oil, trade name of Mobil Ltd.), Mesamoll (alkyl sulphonic ester of phenol, trade name of Bayer), epoxidised soyabean oil, and the like. Examples of fillers are talc, silica, diatomaceous earth, china clay, and the like.

The pesticide may be any one or more of an diamidide, such as amitraz; an organochlorine, such as lindane; a synthetic pyrethroid, such as permethrin (alone or admixed with a synergist such as piperonyl butoxide); a carbamate, such as propoxur or carbaryl; or an organophosphate, such as diazinon, dichlorvos, phosmet, tetrachlorvinphos, dursban or trichlorphos.

Some pesticides, for example dursban and phosmet, have an unpleasant smell which may be masked or absorbed by suitable absorbers, perfumes and the like.

The amount of pesticide present may vary, depending on the pesticide, the polymeric material, and the other constituents present.

The article provided by the invention can be used for the control of ticks, fleas, or other insects or acarines on animals, and such methods form a further aspect of the invention.

This invention is illustrated in non-limiting manner by reference to the following Examples of compositions which can be used to prepare brushes according to the invention by plastics extrusion.

## Examples 1 to 4

| Constituent | Ex.1 | Ex.2 | Ex.3 | Ex.4 |
|---|---|---|---|---|
| Amitraz | 15,0 | 15,0 | 15,0 | 15,0 |
| Lindane | 15,0 | 15,0 | 15,0 | 15,0 |
| Polyethylene (linear low density) 7042 | 25,0 | 39,5 | 36,5 | 31,5 |
| PVC (Corvic S6611) | 39,5 | 25,0 | 20,0 | 15,0 |
| Heat stabilizer (TBLS) | 3,0 | 3,0 | 3,0 | 3,0 |
| Calcium oxide stabilizer | 2,5 | 2,5 | 2,5 | 2,5 |
| Nitrile rubber N8 | - | - | 8.0 | 8.0 |
| Stearic acid lubricant | - | - | 0,2 | 0,2 |
| Di-isoctyl adipate plasticizer | - | - | - | 10,0 |

The amounts given above are percentages by weight. The constituents were melted together and the molten mass was extruded to form a brush. The brush obtained was suitable for brushing dogs and the like to remove ticks, fleas, etc.

3

# 0 122 605

## Example 5

Efficacy Tests

All brushings were carried out with the nap of the hair, as one would normally groom a dog. The brushings were systematically undertaken ensuring that each part of the body was covered once only. Firm pressure was applied when brushing. Initially, brushings were carried out seven times during the first nine days in order to reduce the tick numbers to zero. Each subsequent brushing was carried out only when ticks had again attached to the dogs. These periods varied from four to twenty two days.

The dogs were naturally challenged with *Haemaphysalis leachi* ticks every seven days by being released into a plot of land known to be infested with the ticks. From the third week onwards, the dogs were additionally challenged with twenty *Rhipicephalus sanguineus* ticks each week using a standard artificial challenge method. They were also challenged with 100 *Ctenocephalides felis* fleas each week until it was established that the brushes were not providing flea control. Tick and flea counts were carried out 24 hours after the first treatment and at least once a week thereafter.

The tick control provided by the brushes was excellent. On most occasions the number of ticks was reduced to zero on the day following treatment. Excellent tick control remained for the 103 days of the trial. There was also a decrease in the number of fleas on the dogs following the initial brushings.

## Claims

1. An article comprising a base and a plurality of protrusions therefrom, which protrusions may be passed with a brushing or combing action through the fur or other hair covering of an animal, characterised in that at least some of the protrusions are made of a polymeric material comprising a pesticide capable of blooming onto the surface of the material.

2. An article according to claim 1 in the form of a brush.

3. An article according to claim 1 or 2 wherein some of the protrusions comprise the pesticide and others do not.

4. An article according to claim 3 wherein the protrusions which do not comprise pesticides are made of a relatively stiff material.

5. An article according to any one of the preceding claims wherein some of the protrusions comprise one such pesticide and others comprise a different such pesticide.

6. A process for making an article according to any one of the preceding claims comprising the steps of mixing a polymeric material and a pesticide, and forming the mixture into a brush or comb.

7. A method of combating ectoparasites of an animal by brushing or combing the fur or other hair covering of the animal with an article according to any one of claims 1 to 5.

## Patentansprüche

1. Gegenstand aus einer Basis und einer Vielzahl aus ihr hervorstehenden Teile, die mit einer bürstenden oder kämmenden Bewegung durch das Fell oder anderes ein Tier bedeckendes Haar geführt werden können, dadurch gekennzeichnet, daß mindestens einige der hervorstehenden Teile aus einem polymeren Material gemacht sind, das ein Pestizid enthält, das auf die Oberfläche des Materials ausblühen kann.

2. Gegenstand nach Anspruch 1 in Form einer Bürste.

3. Gegenstand nach Anspruch 1 oder 2, bei dem einige der hervorstehenden Teile das Pestizid enthalten und andere nicht.

4. Gegenstand nach Anspruch 3, bei dem die hervorstehenden Teile, die kein Pestizid enthalten, aus einem verhältnismäßig steifen Material gemacht sind.

5. Verfahren nach einem der vorstehenden Ansprüche, bei dem einige der vorstehenden Teile ein Pestizid und andere ein hiervon verschiedenes Pestizid enthalten.

6. Verfahren zur Herstellung eines Gegenstandes nach einem der vorstehenden Ansprüche, bei dem ein polymeres Material und ein Pestizid vermischt werden und das Gemisch in eine Bürste oder in einen Kamm verformt wird.

7. Verfahren zur Bekämpfung von Ectoparasiten eines Tieres durch Bürsten oder Kämmen des Felles oder von anderem das Tier bedeckendem Haar mit einem Gegenstand nach einem der Ansprüche 1 bis 5.

## Revendications

1. Article comprenant une base et une pluralité de protubérances sur celle-ci, lesquelles protubérances peuvent être passées avec un effet de brossage ou de peignage dans la fourrure ou autre livrée pileuse d'un animal, caractérisé en ce qu'au moins certaines des protubérances sont faites d'une matière polymère comprenant un pesticide capable de faire efflorescence à la surface de la matière.

2. Article suivant la revendication 1, sous la forme d'une brosse.

3. Article suivant la revendication 1 ou 2, dans lequel certaines des protubérances comprennent le pesticide et d'autres n'en comprennent pas.

**0 122 605**

4. Article suivant la revendication 3, dans lequel les protubérances qui ne comprennent pas de pesticide sont faites d'une matière relativement raide.

5. Article suivant l'une quelconque des revendications précédentes, dans lequel certaines des protubérances comprennent un tel pesticide et d'autres comprennent un tel pesticide différent.

6. Procédé pour fabriquer un article suivant l'une quelconque des revendications précédentes, comprenant les stades de mélanger une matière polymère et un pesticide et de façonner le mélange en une brosse ou un peigne.

7. Procédé pour combattre les ectoparasites chez un animal par brossage ou peignage de la fourrure ou autre livrée pileuse de l'animal au moyen d'un article suivant l'une quelconque des revendications 1 à 5.